# EUROPEAN PATENT SPECIFICATION

(11) **EP 3 179 005 B1**
(45) Date of publication and mention of the grant of the patent: **05.08.2020**
(21) Application number: 16203275.9
(22) Date of filing: 09.12.2016
(51) Int. Cl.: E04D 13/04, B29C 65/10

(54) **METHOD FOR MANUFACTURING A ROOF DRAINAGE**
HERSTELLUNGSVERFAHREN FÜR DACHABLAUF
MÉTHODE DE PRODUCTION D'UN DRAIN DE TOIT

(30) Priority: 10.12.2015 BE 201505810; 07.09.2016 BE 201605681
(43) Date of publication of application: 14.06.2017
(73) Proprietor: Van Rijsseghem bvba, 9160 Lokeren (BE)
(72) Inventor: Van Rysseghem, Sven, 9160 Lokeren (BE)
(74) Representative: Brants, Johan P.E.

(56) References cited:
- EP-A1- 1 710 365
- WO-A1-2012/045372
- WO-A2-2005/086837
- NL-A- 9 201 790

## Description

### TECHNICAL FIELD

The invention relates to a method for manufacturing a roof drainage.

### STATE OF THE ART

A roof drainage is a device for the drainage of water, in particular rainwater, and it is well known from the prior art.

NL 1 036 985 discloses a roof duct and method for manufacturing a roof duct. In the method, an opening is made in a plate-shaped part and an edge of the opening is bulged into a metal tube, after which an inner tube is inserted into the metal tube, in such a way that the inwardly bent edge is situated at least partially between the metal tube and the inner tube. With the aid of adhesives or the application of a constriction in the tube, the components are interconnected.

NL 1 036 985 shows the problem that the use of gluing or of a constriction may give rise to an incomplete connection between the components of the roof duct. Such an incomplete connection is undesirable, since there is no guarantee for the permanent bonding between the components of the roof duct.

NL 9 201 790 describes an outflow element for the drainage of rainwater, comprising a lead plate with a hole and an aluminium pipe attached in a sealing manner in the hole, wherein the respective end of the pipe has bulges and the re-modellable plate has a collar at the location of the hole, which with the aid of a stainless steel clamping tube which is to be pressed in the respective end, keeps the collar in pressing contact with the bulges. In the manufacture of the outflow element, use is made of a pulling mandrel, with which both the collar is formed and the clamping tube is pressed into the respective end.

NL 9 201 790 obtains a bond between the components of the outflow element via a mechanically pressing contact. The necessity of bulges of the pipe in this attachment leads to the problem that the attachment manner is rather complex. In addition, in small irregularities of the bulges, the risk may occur that an incomplete connection is obtained between the components of the outflow element.

WO2012/045372 A1 discloses a waterproofing system, such as a drain or a vent, and methods for producing such a system.

The present invention aims to find a solution for at least some of the above-mentioned problems.

To this purpose, the present invention aims at a simple manner for the manufacture of a roof drainage with a form-closed and form-fitted connection between the components of the roof drainage.

### SUMMARY OF THE INVENTION

A first aspect of the present invention relates to a method according to claim 1 for the manufacture of a roof drainage 1 for the drainage of in particular rainwater, comprising the steps of:
- providing a drainage pipe 2;
- providing of a clamping bush 3; and
- providing a plate-shaped part 4 with a plate opening 5,
wherein the method further comprises the steps of the bulging of an edge 6 of the plate opening 5 around the clamping bush 3 as result of which the bulged part 7 is obtained, placing an end 8 of the drainage pipe 2 around the bulged part 7, and the deforming of the drainage pipe 2 for attaching of the plate-shaped part 4 between the clamping bush 3 and drainage pipe 2.

Placing the end 8 of the drainage pipe 2 around the bulged part 7 and the subsequent deforming of the drainage pipe leads to a clamping of the bulged part 7 between the clamping bush 3 and drainage pipe 2. In this way, the plate-shaped part 4 is connected to the drainage pipe 2. This connection is to be carried out intuitively and easily as a deformation of the outer most part, namely the drainage pipe 2, is used to achieve the connection. The execution of the deformation further requires only simple operations.

A second aspect not forming part of the present invention relates to a roof drainage 1 for the drainage of, in particular, rainwater, comprising a drainage pipe 2, a clamping bush 3, and a plate-shaped part 4, the plate-shaped part 4 comprising a plate opening 5 having a bulged part 7 as extension of an edge 6 of the opening 5, the bulged part 7 is designed to be form-closed clamped between an end 8 of the drainage pipe 2 and the clamping bush 3, in which the drainage pipe 2 comprises a thermoplastic.

Because the drainage pipe 2 comprises a thermoplastic, it is highly deformable at elevated temperatures. On this basis, a form-closed connection can be easily obtained between drainage pipe 2, plate-shaped part 4 and clamping bush 3. This ensures an optimum attachment between the components of the roof drainage 1, so that the lifespan of the roof drainage 1 is large.

### DESCRIPTION OF FlGURES

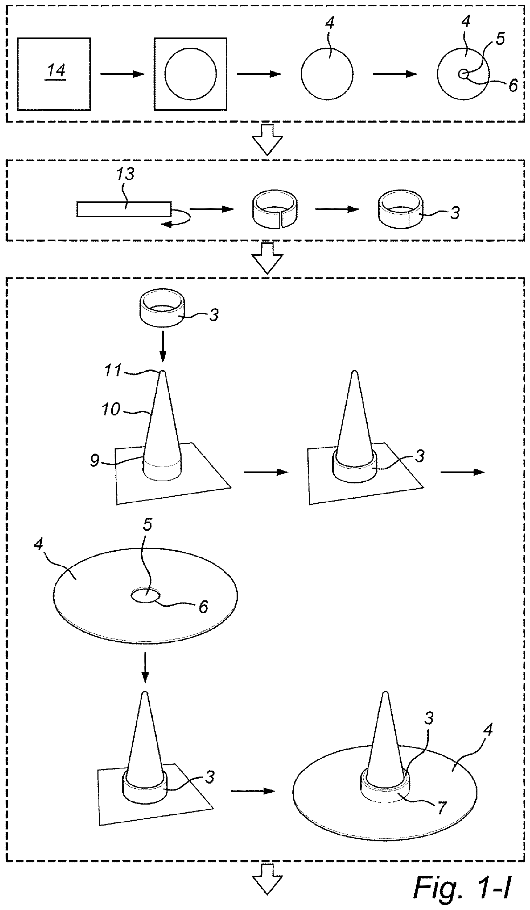

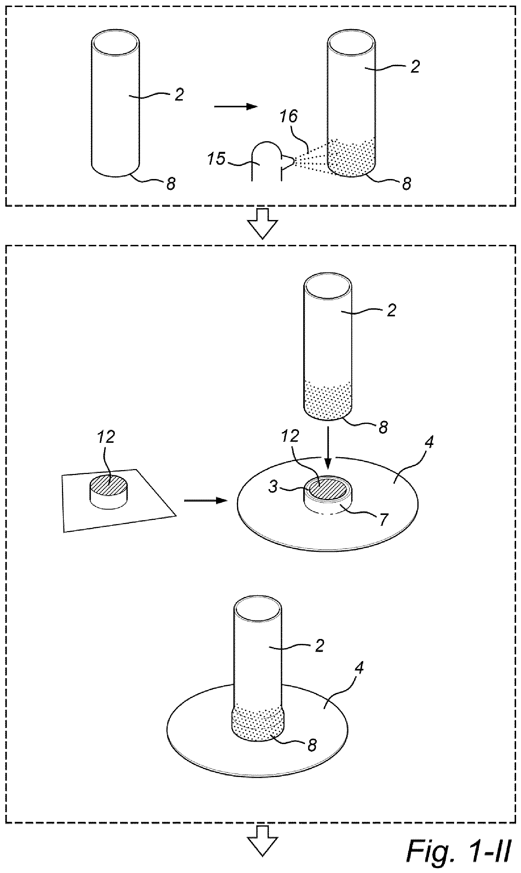

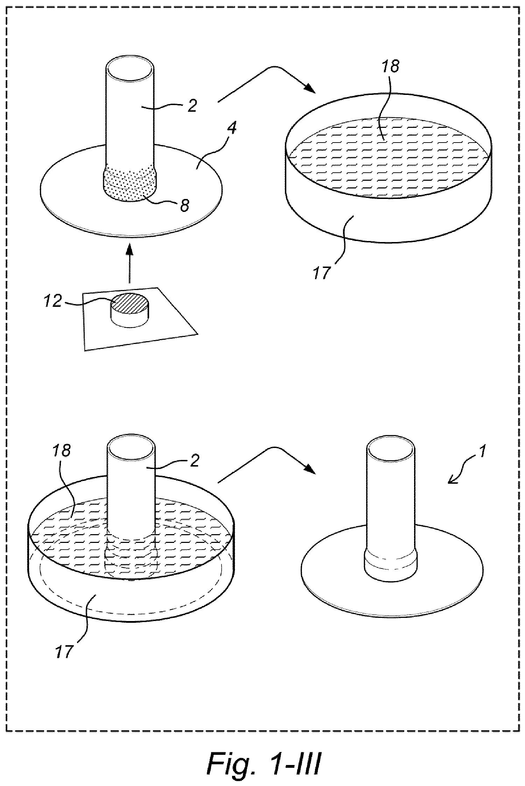

Fig. 1 is a schematic representation of a method according to the invention, said method comprising a series of process steps leading to the manufacture of a roof drainage 1.

### DETAILLED DESCRIPTION

A first aspect of the present invention relates to a method for the manufacture of a roof drainage 1 for the drainage of, in particular, rainwater, comprising the steps of:
- providing a drainage pipe 2;
- providing a clamping bush 3; and
- providing a plate-shaped part 4 with a plate opening 5,
wherein the method further comprises the steps of bulging an edge 6 of the plate opening 5 around the clamping bush 3, as a result of which a bulged part 7 is obtained, placing an end 8 of the drainage pipe 2 around the bulged part 7, and deforming the drainage pipe 2 for attachment of the plate-shaped part 4 between the clamping bush 3 and drainage pipe 2.

Said drainage pipe 2 is a tubular object which is designed to drain water, in particular rainwater. In embodiments, the provision of a drainage pipe 2 comprises making available a custom-made drainage pipe 2, the tailored removal of a desired amount of drainage pipe 2 from a longer tube, or the custom manufacture of a drainage pipe 2. Said clamping bush 3 is a tubular object which is designed to be placed internally of the drainage pipe 2 in order to thus clamp said bulged part 7 between the clamping bush 3 and drainage pipe 2. In embodiments, the provision of a clamping bush 3 comprises making available a clamping bush 3, the tailored removal of a desired amount of clamping bush 3 from a larger object, or the custom manufacture of a clamping bush 3. Said plate-shaped part 4 is designed to rest on a part of a roof and to lead water, in particular rainwater, to the drainage pipe 2. In embodiments, the provision of said plate-shaped part 4 comprises making available said part 4, the removal of said part 4 from a larger object, or the custom manufacture of said part. Drainage pipe 2, clamping bush 3, and plate-shaped part 4 may comprise one or more suitable materials as known from the prior art. Because of considerations of waterproofing and solidity, drainage pipe 2, clamping bush 3, and plate-shaped part 4 can be made up of one or more layers. The plate-shaped part 4 is preferably carried out in a watertight material. In one embodiment, the plate-shaped part 4 comprises bitumen. In another embodiment, the plate-shaped part 4 comprises ethylene propylene diene monomer (EPDM) rubber, a type of synthetic rubber. EPDM rubber is an elastomer which is characterized by a wide range of applications. EPDM rubber is used among other things as a watertight covering for roofs. EPDM rubber does not pollute the discharged rainwater, which is of vital importance if a person wants to use this water for personal hygiene applications. Another suitable material for the plate-shaped part 4 is a thermoplastic polyolefin. Thermoplastic polyolefins herein refer to polymer / filler mixtures which usually comprise a certain fraction of polypropylene, polyethylene, block copolymer polypropylene, or rubber, in addition to a reinforcing filler. Suitable fillers comprise, but are not limited to, talc, glass fibre, carbon fibre, wollastonite and metal oxy sulphate. Suitable rubbers comprise ethylene-propylene rubber, EPDM rubber, ethylene-octene rubber, ethylene-butadiene rubber and styrene-ethylene-butadiene-styrene rubber. In embodiments, the plate-shaped part 4 comprises one or more flexible plastics, such as plastics, with thermoplastic properties, such as, but not limited to, polyethylene, polypropylene and/or polyvinyl chloride. In embodiments, the plate-shaped part 4 comprises a structure comprising one or more layers which are reinforced with carbon fibres, glass fibres, or other fibres having high strength.

A suitable material for the plate-shaped part 4 can be provided by a bituminous membrane comprising a bitumen layer and a rubber layer. Preferably, said bitumen layer is coated onto said rubber layer.

Preferably, said bitumen layer is comprised of APAO ("amorphous polyalphaolefin") bitumen. APAO offers an excellent temperature resistance at high temperatures, good flexibility at low temperatures, good water resistance, good anti-oxidation, and UV stability. APAO bitumen are flexible and have a high adhesive strength. Although APAO bitumen are less strong than, for example, SBS ("styrene butadiene styrene") or APP ("atactic polypropylene"), the bituminous membrane is sufficiently strong by the combination of the APAO bitumen layer and a TPO/FPA rubber layer.

Preferably, said rubber layer has a thickness of 1.2 to 2.0 mm, measured according to EN1849-2; a surface weight of 1.08 to 1.80 kg/m², measured according to EN 1849-2; a tensile strength of at least 10 N/mm², and preferably of 12 N/mm² to 20 N/mm², measured according to EN 12311-2; a stretch to breakage of at least 550%, preferably from 600% to 1000%, and more preferably from 600% to 800%, measured according to EN 12311-2; and an absolute water resistance, measured in accordance with EN 1928.

Preferably, said rubber layer is comprised of TPO (Eng. "Thermoplastic Polyolefin") or TPO/FPA (Eng. "Thermoplastic Polyolefin / Flexible Polypropylene Alloy") material. TPO and TPO/FPA are extremely suitable because they combine the advantages of EPDM rubber (being good physical properties, weather resistance, no volatile and toxic components) with the advantages of PVC (being weldable and aesthetic). In addition, TPO and TPO/FPA are bitumen resistant while EPDM has the tendency to swell up at higher temperatures of 70°C to 80°C as a result of separation of the oils in the bitumen. Such temperatures are quickly reached during the installation of a watertight covering, since they are welded at temperatures that can reach up to 600°C.

The inventors found that an APAO bitumen layer can mainly be advantageously used in combination with a TPO or a TPO/FPA rubber layer. Preferably, said bitumen layer is coated onto said rubber layer.

Preferably, the top film is comprised of a thin PVC film. Such film is a protective film which ensures that the bitumen layer does not stick to the rubber layer when the bituminous membrane is rolled up after processing into rolls. During installation, the top film can be burnt off.

Said bituminous membrane is extremely suitable as a watertight material for said plate-shaped part 4. Furthermore, said bituminous membrane can be used as a water barrier, wall slabs, in ventilation pipes, chimney ducts, waterproofing of foundation in moist soils, etc.

The bulging of the edge 6 of the plate opening 5 around the clamping bush 3 is preferably carried out by pulling the manufactured plate opening 5 initially with a smaller cross-section, around the circumference of the clamping bush 3.

The deformation of the drainage pipe 2 is accomplished in preferred embodiments by selecting a drainage pipe 2 of a deformable material. This drainage pipe 2 is then deformed while it is being placed around the bulged part 7. In another embodiment, the deformation of the drainage pipe 2 is obtained by exerting a clamping and inwardly directed force onto the circumference of the drainage pipe 2, after the drainage pipe 2 has been placed around the bulged part 7. For this latter embodiment, a known press can be used. Because of its simplicity, in contrast to more complex methods for the manufacture of a roof drainage such as known from the prior art, the manufacture of a roof drainage 1 wherein the components are attached to one another by means of the deformation of the drainage pipe 2 cannot be considered obvious to a skilled person in the art.

Placing an end 8 of the drainage pipe 2 around the bulged part 7, and the subsequent deformation of the drainage pipe leads to a clamping of the bulged part 7 between clamping bush 3 and drainage pipe 2. In this way, the plate-shaped part 4 is connected to the drainage pipe 2. This connection is to be carried out intuitively and easily since a deformation of the outer most part, namely the drainage pipe 2, is used to achieve the connection. The execution of the deformation moreover requires only simple operations.

Said form-closed connection will ensure that the roof drainage 1 is water- and air-tight. This offers the advantage that there is a good waterproof and odour sealing adhesion between the drainage pipe 2 and the plate-shaped part 4, wherein on the plate-shaped part 4, falling water flows directly into the drainage pipe 2.

In a preferred embodiment, the present invention provides a method according to the first aspect of the invention, in which the drainage pipe 2 comprises a thermoplastic and in that the method further comprises the step of heating the drainage pipe 2 prior to the placing of said end 8 of the pipe 2 around the bulged part 7, and wherein the deformation of the drainage pipe 2 takes place during the placement of the pipe 2.

The term "thermoplastic" is used herein for a polymer material which is pliable, malleable or liquefiable above a specific temperature and substantially hardens after cooling. Examples of thermoplastic polymers comprise, but are not limited to, vinyl containing thermoplastics: such as polyvinyl chloride, polyvinyl acetate, polyvinyl alcohol, and other vinyl and vinylidene resins and copolymers thereof; polyethylene compounds: such as low density polyethylene and high density polyethylene and copolymers thereof; styrene compounds: such as ABS, SAN, and polystyrenes and copolymers thereof, polypropylene and copolymers thereof; saturated and unsaturated polyesters; acrylic; polyamides such as nylon containing types; engineering plastics such as acetyl, polycarbonate, polyimide, polysulphone, polyphenylene oxide and sulphide resins and the like.

Via the heating of the thermoplastic comprising drainage pipe 2 prior to the placing of the end 8 of the drainage pipe 2 around the bulged part 7, wherein the deformation of the drainage pipe 2 takes place during the placement of the tube 2, in a simple way a form-closed bond between drainage pipe 2, and plate-shaped part 4 is obtained. The need for other more energy-requiring fixation techniques such as welding, gluing, rolling and/or soldering also become unnecessary because of this, as well as operations that often accompany a bonding, such as the degreasing of a surface and/or the provision of a primer. The connection obtained with the aid of a thermoplastic is, moreover, resistant to corrosion, in contrast to the well-known welding or solder connections of classical roof drainages with metal components. The roof drainage 1 is also advantageous in the context of health and environmental considerations, since the use of a deformable thermoplastic makes the classic use of deformable components in lead superfluous. The connection obtained with the aid of a thermoplastic for the manufacture of the roof drainage 1 can certainly not be called obvious for a skilled person in the prior art. Such a person would, after all, rather resort to the traditional combination of metal components and fixation techniques applicable to metal for the manufacture of a roof drainage.

In one embodiment, the heated and, therefore, flexible material of the drainage pipe can moreover be bent locally, so that a roof drainage 1 is obtained which is suitable to act as a side outflow element. This means that the latter embodiment of a roof drainage 1 is suitable for the drainage of water, in particular rainwater, in a horizontal, slightly downward going, direction. To this end, if desired, in embodiments the clamping bush 3 is carried out obliquely.

In a preferred embodiment, the present invention provides a method according to the first aspect of the invention, wherein the thermoplastic comprising drainage pipe 2 is radially heated from the inside to the outside. As a result, the heat will first reach the interior of the drainage pipe 2, as a result of which this interior can be optimally warmed up. Since the interior of the drainage pipe 2 is brought into contact with the bulged part 7, the connection between drainage pipe 2 and bulged part 7 will be positively influenced by said radial heating.

In a preferred embodiment, the present invention provides a method according to the first aspect of the invention, in which the drainage pipe 2 is heated with a gaseous medium. A gaseous medium can easily reach the entire surface of the drainage pipe 2 to be heated because of its great freedom of movement. Each manner to provide a heated gaseous medium, such as known from the prior art, can be used. For example, a stream of hot air can be blown into the pipe 2, or the pipe 2 can be placed in a hot-air oven.

In a preferred embodiment, the present invention provides a method according to the first aspect of the invention, wherein the method further comprises the step of cooling at least the bulged part 7, the end 8 of the drainage pipe 2 around the bulged part 7, and the clamping bush 3 at the level of the bulged part 7, wherein the cooling takes place after the placement and deformation of the heated drainage pipe 2 around said bulged part 7. Because of the cooling, the heated and thermoplastic comprising drainage pipe 2 is brought to a lower temperature, as a result of which the liquefied material of the drainage pipe 2 hardens again. Thus, a solid and form-fitting connection between drainage pipe 2, clamping bush 3, and plate-shaped part 4 is obtained.

In a preferred embodiment, the present invention provides a method according to the first aspect of the invention, wherein the cooling is carried out by placing at least the bulged part 7, the end 8 of the drainage pipe 2 around the bulged part 7, and the clamping bush 3 at the level of the bulged part 7 in cooled water. When cooling by means of cooled water, the cold of the water is transferred in a simple manner over the whole submerged volume of the roof drainage 1. In other embodiments, the cooling is carried out by means of a gaseous medium. In yet another embodiment, the cooling is carried out by means of ice. Herein, a fine distribution of the ice is conducive to the transfer of the cold.

In a preferred embodiment, the present invention provides a method according to the first aspect of the invention, wherein the method further comprises the step of cutting out the plate-shaped part 4.

The cutting can be performed manually or mechanically using a knife. In other embodiments, the cutting is done by means of punching. In embodiments, also the plate opening 5 is cut from the plate-shaped part 4. In embodiments wherein the plate-shaped part 4 is provided with an internal reinforcement, the plate opening 5 can be increased, if desired, by pulling the plate-shaped part 4 along the opening 5 over the broadened body of a tapered structure. In embodiments, said tapered structure relates to a conical structure.

In a preferred embodiment, the present invention provides a method according to the first aspect of the invention, in which the bulging of an edge 6 of the plate opening 5 around the clamping bush 3 is carried out by placing the clamping bush 3 around the broadened base 9 of a tapered mould 10, followed by moving the plate opening 5 around said mould 10 and along the tapered tip 11 of the mould 10 in the direction of the clamping bush 3 placed around said base 9. In this way, the plate opening 5 with initially smaller diameter will be stretched and the plate-shaped part 4 will be placed form-closed around the clamping bush 3 by means of the bulged part 7 formed around the circumference of the clamping bush 3.

In a preferred embodiment, the present invention provides a method according to the first aspect of the invention, wherein the method further comprises the step of placing the clamping bush 3 provided with the surrounding bulged part 7 around a truncated mould 12. In such a way, clamping bush 3 and plate-shaped part 4 are fixed in a convenient manner, as a result of which a directed placement of the end 8 of the drainage pipe 2 around the bulged part 7 is simplified in a later step.

In a preferred embodiment, the present invention provides a method according to the first aspect of the invention, wherein the method further comprises the step of forming the clamping bush 3 by rolling up and welding a metal bar 13. The forming of the clamping bush 3 offers the advantage that the diameter of the clamping bush 3 can be optimally adjusted to the diameter of the drainage pipe 2. For the welding, any welding process as known in the art can be used, among which arc welding, electric resistance welding, gas welding, pressure welding, spot welding and beam welding. Preferably, the clamping bush comprises aluminium or stainless steel, and most preferably aluminium.

In a preferred embodiment, the present invention provides a method according to the first aspect of the invention, wherein the welding of the metal bar 13 for forming the clamping bush 3 is carried out by means of TIG welding. TIG welding or Tungsten Inert Gas welding belongs to the category of electric arc welding. TIG welding provides, inter alia, the advantage that the welding process gives no spattering. This gives a person performing the welding process a very good view of the weld pool, and the fusing of welding spatters to the metal bar 13 or clamping bush 3, or to the environment, is avoided.

In one embodiment, in an additional step, the roof drainage 1 is placed in an opening or to the contours of an existing or roof to be constructed, wherein the plate-shaped part 4 rests on said roof and on the plate-shaped part 4, a roof covering is further placed. In embodiments, the plate-shaped part 4 comprises a layer of adhesive. With such an adhesive layer, this part 4 can be attached to said roof. In embodiments, said roof covering comprises a bitumen product or a flexible plastic, such as a polyvinyl product or an ethylene-propylene-diene-monomer product. In embodiments, the roof covering is glued and/or welded, in which a hole is cut in the roof covering at the level of the opening 5. In preferred embodiments, with the aid of heating, a partial or complete thermal bonding of the constituent components is realized. In an additional embodiment, an adhesive tape can further be provided, such as, for example, a butyl tape, between the constituent parts.

A second aspect not forming part of the present invention relates to a roof drainage 1 for the drainage of, in particular, rainwater, comprising a drainage pipe 2, a clamping bush 3, and a plate-shaped part 4, the plate-shaped part 4 comprising a plate opening 5 having a bulged part 7 as extension of an edge 6 of the opening 5, wherein the drainage pipe 2 comprises a thermoplastic. More specifically, the bulged part 7 is thermally form-closed clamped between an end 8 of the drainage pipe 2 and the clamping bush 3. By the term "thermally form-closed clamped" is meant that the clamping between the two components is the result of a pre-heating of at least one of the components at the level of the contact surface between the two components. As a result, at the level of the contact surface, a partial or complete adhesion of the constituent components is achieved.

Because the drainage pipe 2 comprises a thermoplastic, it is highly deformable at elevated temperatures. On basis thereof, a form-closed connection between drainage pipe 2, plate-shaped part 4 and clamping bush 3 can easily be obtained. This ensures an optimum adhesion between the components of the roof drainage 1, so that the lifespan of the roof drainage 1 is large.

In a preferred embodiment, the second aspect provides a roof drainage 1, wherein the drainage pipe 2 comprises polyethylene.

Polyethylene is a thermoplastic and is therefore particularly suitable as a material for the drainage pipe 2 of the roof drainage 1 according to the present invention. Polyethylene additionally exhibits favourable properties such as a high robustness, high electrical resistance, low water absorption, relatively low stiffness and a high tensile strength.

In embodiments, the drainage pipe 2 of the roof drainage 1 has a length of 200 to 800 mm, and more preferably of 350 to 650 mm. In embodiments, the drainage pipe 2 has a diameter of 30 to 300 mm, and more preferably of 40 to 180 mm.

In a preferred embodiment, the second aspect provides a roof drainage 1, which is manufactured by means of a method according to the first aspect of the invention.

### EXAMPLES

### EXAMPLE 1

Fig. 1, comprising the sub-figures Fig. 1-I, Fig. 1-II and Fig. 1-III, is a schematic representation of a series of process steps leading to the manufacturing of a roof drainage 1, according to embodiments of the present invention.

In a first step, the contours of a circular plate-shaped part 4 are cut out of a sheet 14 of EPDM rubber, and thereof a plate opening 5 is further cut. The diameter of the plate opening 5 is selected such that it is smaller than the diameter of the clamping bush 3 to be manufactured.

In a second step, an aluminium bar 14 is rolled up and subsequently the ends of the bar 14 facing one another are welded together by means of TIG welding. The diameter of the thus obtained clamping bush 3 thus is adjusted to the diameter of the drainage pipe 2 to be manufactured.

In a third step, first the clamping bush 3 is placed around the broad base 9 of a cone-shaped mould 10, after which the plate-shaped part is moved by means of its plate opening 5 around said mould 10 and along the tapered tip 11 of the mould 10 in the direction of the clamping bush 3 placed around said base 9. In this way, a bulged part 7 of the plate-shaped part 4 is formed. This bulged part 7 can be seen as a part of the plate-shaped portion 4 that has been folded around the clamping bush 3. By making use of the cone-shaped mould 10, and pulling out the plate-shaped part 4 during the displacement thereof, a form-closed adhesion is obtained between bulged part 7 and clamping bush 3.

In a fourth step, an end 8 of a polyethylene comprising drainage pipe 2 is heated with heated air 16 which is supplied by means of a heater 15.

In a fifth step, the whole of clamping bush 3 and plate-shaped part 4 form-closed around it are arranged on a truncated mould 12, after which the drainage pipe 2 is placed by means of its heated end 8 on the bulged part 7. Because of the heating in the preceding step, the polyethylene material of the drainage pipe 2 is deformable, so that the drainage pipe 2 can deform flexibly and can adapt optimally to the shape of the bulged part 7. In this manner, a form-closed connection between drainage pipe 2, plate-shaped part 4 and clamping bush 3 is obtained, wherein the bulged part 7 is clamped between drainage pipe 2 and clamping bush 3.

In a sixth and final step, the whole of the drainage pipe 2, clamping sleeve 3 and plate-shaped part 4 is removed from the truncated mould 12, after which the plate-shaped part 4, clamping bush 3, and the part of the drainage pipe 2 in the vicinity of the heated end 8, are immersed in a container 17 with cooled water 18, after which a cooled roof drainage 1 is taken from said first container 17. Because of the cooling, the heated and polyethylene comprising drainage pipe 2 is brought to a lower temperature, as a result of which the liquefied material of the drainage pipe 2 hardens again. The thus obtained roof drainage 1 is in this way an extremely strong and form-closed whole, and this as a result of the extremely strong and form-closed adhesion between drainage pipe 2, clamping bush 3 and plate-shaped part 4.

Although the example described is for a drainage pipe 2 and clamping bush 3 with a circular cross-section, and a plate-shaped part 4 with a circular cross-section as a plate opening 5, the present invention is of course applicable for embodiments with non-circular cross-sections, such as, but not limited to, square cross-sections, triangular cross-sections or hexagonal cross-sections. The contours of the plate-shaped part 4 are also not limited to a round shape, but may exhibit any other form, such as, but not limited to, a square, a triangular or hexagonal shape.

## Claims

1. Method for manufacturing a roof drainage (1) for the drainage of, in particular, rainwater, comprising the steps of:
- providing a drainage pipe (2);
- providing a clamping bush (3); and
- providing a plate-shaped part (4) with a plate opening;
wherein the method further comprises the steps of the bulging of an edge (6) of the plate opening (5) around the clamping bush (3) as a result of which a bulged part (7) is obtained, placing an end (8) of the drainage pipe (2) around the bulged part (7), and the deforming of the drainage pipe (2) for the attachment of the plate-shaped part (4) between the clamping bush (3) and drainage pipe (2), **characterized in that** the drainage pipe (2) comprises a thermoplastic and **in that** the method further comprises the step of heating the drainage pipe (2) before said end (8) of the pipe (2) is being placed around the bulged part (7), and **in that** the deformation of the drainage pipe (2) takes place during the placement of the pipe (2).

2. Method according to claim 1, **characterized in that** the thermoplastic comprising drainage pipe (2) is heated radially from the inside to the outside.

3. Method according to claim 1 or 2, **characterized in that** the drainage pipe (2) is heated with a gaseous medium.

4. Method according to any one of claims 1 to 3, **characterized in that** the method further comprises the step of cooling at least the bulged part (7), the end (8) of the drainage pipe (2) around the bulged part (7), and the clamping bush (3) at the level of the bulged part (7), wherein the cooling takes place after the placement and deformation of the heated drainage pipe (2) around said bulged part (7).

5. Method according to claim 4, **characterized in that** the cooling is carried out by placing at least the bulged part (7), the end (8) of the drainage pipe (2) around the bulged part (7), and the clamping bush (3) at the level of the bulged part (7) in cooled water.

6. Method according to any one of claims 1 to 5, **characterized in that** the method further comprises the step of cutting out the plate-shaped part (4).

7. Method according to any one of claims 1 to 6, **characterized in that** said plate-shaped part (4) is comprised of a bitumen layer and a rubber layer, and wherein said bitumen layer is comprised of APAO bitumen and wherein said rubber layer is comprised of TPO and/or TPO/FPA.

8. Method according to any one of claims 1 to 7, **characterized in that** the bulging of an edge (6) of the plate opening (5) around the clamping bush (3) is carried out by placing the clamping bush (3) around the broad base (9) of a tapered mould (10), followed by moving the plate opening (5) around said mould (10) and along the tapered tip (11) of the mould (10) in the direction of the clamping base (3) placed around said base (9).

9. Method according to any one of claims 1 to 8, **characterized in that** the method further comprises the step of placing the clamping bush (3) provided with the bulged part (7) surrounding it around a truncated mould (12).

10. Method according to any one of claims 1 to 9, **characterized in that** the method further comprises the step of forming the clamping bush (3) by rolling up and welding a metal bar (13).

11. Method according to claim 10, **characterized in that** the welding of the metal bar (13) is carried out in order to form the clamping bush (3) by means of TIG welding.

## Patentansprüche

1. Verfahren zur Herstellung eines Dachablaufs (1) zum Ableiten von insbesondere Regenwasser, die folgenden Schritte umfassend:
- Bereitstellen eines Ablaufrohrs (2);
- Bereitstellen einer Klemmbuchse (3); und
- Bereitstellen eines plattenförmigen Teils (4) mit einer Plattenöffnung; wobei das Verfahren ferner die Schritte des Ausbuchtens eines Randes (6) der Plattenöffnung (5) um die Klemmbuchse (3) herum, in dessen Folge ein ausgebuchteter Teil (7) erhalten wird, des Platzierens eines Endes (8) des Ablaufrohrs (2) um den ausgebuchteten Teil (7) und des Verformens des Ablaufrohrs (2) zum Anbringen des plattenförmigen Teils (4) zwischen der Klemmbuchse (3) und dem Ablaufrohr (2) umfasst, **dadurch gekennzeichnet, dass** das Ablaufrohr (2) einen Thermoplast umfasst und dass das Verfahren ferner den Schritt des Erwärmens des Ablaufrohrs (2), bevor das Ende (8) des Rohrs (2) um den ausgebuchteten Teil (7) platziert wird, umfasst, und dadurch, dass die Verformung des Ablaufrohrs (2) während der Platzierung des Rohrs (2) stattfindet.

2. Verfahren nach Anspruch 1, **dadurch gekennzeichnet, dass** das Thermoplast umfassende Ablaufrohr (2) radial von innen nach außen erwärmt wird.

3. Verfahren nach Anspruch 1 oder 2, **dadurch gekennzeichnet, dass** das Ablaufrohr (2) mit einem gasförmigen Medium erwärmt wird.

4. Verfahren nach einem der Ansprüche 1 bis 3, **dadurch gekennzeichnet, dass** das Verfahren ferner den Schritt des Abkühlens mindestens des ausgebuchteten Teils (7), des Endes (8) des Ablaufrohrs (2) um den ausgebuchteten Teil (7), und der Klemmbuchse (3) auf der Höhe des ausgebuchteten Teils (7), umfasst, wobei das Abkühlen nach der Platzierung und Verformung des erwärmten Ablaufrohrs (2) um den ausgebuchteten Teil (7) stattfindet.

5. Verfahren nach Anspruch 4, **dadurch gekennzeichnet, dass** das Abkühlen ausgeführt wird, indem mindestens der ausgebuchteter Teil (7), das Ende (8) des Ablaufrohrs (2) um den ausgebuchteten Teil (7) und die Klemmbuchse (3) auf der Höhe des ausgebuchteten Teils (7) in gekühltem Wasser platziert werden.

6. Verfahren nach einem der Ansprüche 1 bis 5, **dadurch gekennzeichnet, dass** das Verfahren ferner den Schritt des Ausschneidens des plattenförmigen Teils (4) umfasst.

7. Verfahren nach einem der Ansprüche 1 bis 6, **dadurch gekennzeichnet, dass** der plattenförmige Teil (4) aus einer Bitumenschicht und einer Kautschukschicht besteht, und wobei die Bitumenschicht aus APAO-Bitumen besteht und wobei die Kautschukschicht aus TPO und/oder TPO/FPA besteht.

8. Verfahren nach einem der Ansprüche 1 bis 7, **dadurch gekennzeichnet, dass** das Ausbuchten eines Randes (6) der Plattenöffnung (5) um die Klemmbuchse (3) ausgeführt wird, indem die Klemmbuchse (3) um die breite Basis (9) eines spitz zulaufenden Formwerkzeugs (10) platziert wird, gefolgt von dem Bewegen der Plattenöffnung (5) um das Formwerkzeug (10) und entlang der spitz zulaufenden Spitze (11) des Formwerkzeugs (10) in die Richtung der Klemmbuchse (3), die um die Basis (9) herum platziert ist.

9. Verfahren nach einem der Ansprüche 1 bis 8, **dadurch gekennzeichnet, dass** das Verfahren ferner den Schritt des Platzierens der Klemmbuchse (3), die mit dem sie umgebenden ausgebuchteten Teil (7) bereitgestellt ist, um ein kegelstumpfförmiges Formwerkzeug (12), umfasst.

10. Verfahren nach einem der Ansprüche 1 bis 9, **dadurch gekennzeichnet, dass** das Verfahren ferner den Schritt des Bildens der Klemmbuchse (3) durch Aufrollen und Verschweißen einer Metallstange (13), umfasst.

11. Verfahren nach Anspruch 10, **dadurch gekennzeichnet, dass** das Verschweißen der Metallstange (13) ausgeführt wird, um die Klemmbuchse (3) mittels TIG-Schweißens zu bilden.

## Revendications

1. Procédé de fabrication d'un drainage de toiture (1) pour le drainage, en particulier, des eaux de pluie, comprenant les étapes consistant à :
- fournir un tuyau de drainage (2) ;
- fournir une douille de serrage (3) ; et
- fournir une partie en forme de plaque (4) avec une ouverture de plaque ; dans lequel le procédé comprend en outre les étapes du renflement d'un bord (6) de l'ouverture de plaque (5) autour de la douille de serrage (3) à la suite de quoi on obtient une partie renflée (7), du placement d'une extrémité (8) du tuyau de drainage (2) autour de la partie renflée (7), et de la déformation du tuyau de drainage (2) pour la fixation de la partie en forme de plaque (4) entre la douille de serrage (3) et le tuyau de drainage (2), **caractérisé en ce que** le tuyau de drainage (2) comprend un matériau thermoplastique et **en ce que** le procédé comprend en outre l'étape de chauffage du tuyau de drainage (2) avant que ladite extrémité (8) du tuyau (2) soit placée autour de la partie renflée (7), et **en ce que** la déformation du tuyau de drainage (2) a lieu pendant le placement du tuyau (2).

2. Procédé selon la revendication 1, **caractérisé en ce que** le tuyau de drainage comprenant un thermoplastique (2) est chauffé radialement de l'intérieur vers l'extérieur.

3. Procédé selon la revendication 1 ou 2, **caractérisé en ce que** le tuyau de drainage (2) est chauffé avec un milieu gazeux.

4. Procédé selon l'une quelconque des revendications 1 à 3, **caractérisé en ce que** le procédé comprend en outre l'étape de refroidissement d'au moins la partie renflée (7), de l'extrémité (8) du tuyau de drainage (2) autour de la partie renflée (7) et de la douille de serrage (3) au niveau de la partie renflée (7), dans lequel le refroidissement a lieu après le placement et la déformation du tuyau de drainage chauffé (2) autour de ladite partie renflée (7).

5. Procédé selon la revendication 4, **caractérisé en ce que** le refroidissement est effectué en plaçant au moins la partie renflée (7), l'extrémité (8) du tuyau de drainage (2) autour de la partie renflée (7), et la douille de serrage (3) au niveau de la partie renflée (7) dans de l'eau refroidie.

6. Procédé selon l'une quelconque des revendications 1 à 5, **caractérisé en ce que** le procédé comprend en outre l'étape de découpage de la partie en forme de plaque (4).

7. Procédé selon l'une quelconque des revendications 1 à 6, **caractérisé en ce que** ladite partie en forme de plaque (4) est constituée d'une couche de bitume et d'une couche de caoutchouc, et dans lequel ladite couche de bitume est comprise de bitume APAO, et dans lequel ladite couche de caoutchouc est comprise de TPO et/ou de TPO/FPA.

8. Procédé selon l'une quelconque des revendications 1 à 7, **caractérisé en ce que** le renflement d'un bord (6) de l'ouverture de plaque (5) autour de la douille de serrage (3) est effectué en plaçant la douille de serrage (3) autour de la base large (9) d'un moule conique (10), suivi du déplacement de l'ouverture de plaque (5) autour dudit moule (10) et le long de la pointe conique (11) du moule (10) dans la direction de la douille de serrage (3) placée autour de ladite base (9).

9. Procédé selon l'une quelconque des revendications 1 à 8, **caractérisé en ce que** le procédé comprend en outre l'étape de placement de la douille de serrage (3) munie de la partie renflée (7) qui l'entoure autour d'un moule tronconique (12).

10. Procédé selon l'une quelconque des revendications 1 à 9, **caractérisé en ce que** le procédé comprend en outre l'étape de formation de la douille de serrage (3) en enroulant et en soudant une barre métallique (13).

11. Procédé selon la revendication 10, **caractérisé en ce que** le soudage de la barre métallique (13) est réalisé de manière à former la douille de serrage (3) au moyen d'un soudage TIG.
